## Europäisches Patentamt

## European Patent Office

## Office européen des brevets

(19)

(11) Veröffentlichungsnummer: **0 026 389**
**B1**

(12)

# EUROPÄISCHE PATENTSCHRIFT

(45) Veröffentlichungstag der Patentschrift:
23.01.85

(51) Int. Cl.⁴: **G 21 C 3/62**

(21) Anmeldenummer: **80105532.8**

(22) Anmeldetag: **15.09.80**

(54) Verfahren zur Herstellung von hochdichten oxidischen Kernbrennstoffkörpern.

(30) Priorität: **28.09.79 DE 2939415**

(43) Veröffentlichungstag der Anmeldung:
**08.04.81 Patentblatt 81/14**

(45) Bekanntmachung des Hinweises auf die Patenterteilung:
**23.01.85 Patentblatt 85/4**

(84) Benannte Vertragsstaaten:
**DE FR SE**

(56) Entgegenhaltungen:
**EP - A - 0 012 915**
**DE - B - 1 266 410**
**FR - A - 2 104 136**
**FR - A - 2 203 141**
**US - A - 4 052 330**

(73) Patentinhaber: **KRAFTWERK UNION AKTIENGESELLSCHAFT, Wiesenstrasse 35, D-4330 Mülheim (Ruhr) (DE)**

(72) Erfinder: **Dörr, Wolfgang, Dr., von Weber-Strasse 51a, D-8522 Herzogenaurach (DE)**
Erfinder: **Gradel, Gerhard, Dipl.-Ing., Meisenweg 12, D-8520 Erlangen (DE)**
Erfinder: **Peehs, Martin, Dr., Falkenstrasse 3, D-8521 Bubenreuth (DE)**

(74) Vertreter: **Mehl, Ernst, Dipl.-Ing., Postfach 22 01 76, D-8000 München 22 (DE)**

0 026 389

## Beschreibung

Die Erfindung besteht aus einem Verfahren zur Herstellung von hochdichten oxidischen Kernbrennstoffkörpern aus $UO_2$ mit folgenden Schritten:

a) Mischen des Kernbrennstoffpulvers mit bis zu 10 Gew.-% Pulver aus Selten-Erdoxid, wie z. B. Gadoliniumoxid,
b) Pressen zu Grünlingen,
c) Sintern in oxidierender Atmosphäre bei 800—1400° C für eine Zeit von 15 Minuten bis 2 Stunden,
d) Sintern in reduzierender Atmosphäre bei Temperaturen über 1650° C für eine Zeit von 30 Minuten bis 4 Stunden.

Nach der älteren, nicht vorveröffentlichten europäischen Patentanmeldung 79 105 069.3 (Veröffentlichungs-Nr. 0 012 915), die gemäß Art. 54 Abs. 3 des europäischen Patentübereinkommens für die Frage der erfinderischen Tätigkeit nicht von Bedeutung ist, wird zur Herstellung von oxidischen Kernbrennstoffkörpern mit einem Sauerstoff zu Metallverhältnis von $2,0 \pm 0,02$ aus $UO_2$ bestehendes Kernbrennstoffpulver mit beliebigem Sauerstoff-/Metallverhältnis, dem auch eine nicht näher bezeichnete Menge Gadoliniumoxidpulver beigemengt sein kann, zur Einstellung der Mikrostruktur mit kornwachstumsfördernd wirkenden, aus $U_3O_8$ bestehenden Sinterzusätzen versetzt, gemischt und zu Grünlingen gepreßt, welche anschließend in einem Durchlaufsinterofen zunächst in oxidierender Atmosphäre bei einer Sintertemperatur im Bereich zwischen 1000° C und 1400° C gesintert und dann in reduzierender Gasatmosphäre bei Reduktionstemperaturen von 1000 bis 1400° C und Reduktionszeiten von 15 Minuten bis 2 Stunden behandelt werden. Das oxidierende Gas besteht aus technisch reinem Kohlendioxid und kann in gleicher Richtung wie die Grünlinge durch den Ofenraum geführt werden. Das reduzierende Gas kann aus Wasserstoff bestehen, evtl. vermischt mit einem neutralen Gas wie Stickstoff, gegen die Bewegungsrichtung der Grünlinge durch den Ofen geleitet und zur Einstellung des Restfluorgehalt mit einem entsprechenden Feuchtigkeitsgehalt versehen werden. Längere Sinterzeiten zur Einstellung der Mikrostruktur der Kernbrennstoffkörper können vorgesehen sein. Zur Durchführung des Verfahrens nach der besagten älteren europäischen Patentanmeldung können im Durchlaufsinterofen die Oxidationszone und die Reduktionszone durch einen Stickstoffstrom voneinander getrennt werden, in dem auch das reduzierende und das oxidierende Gas abgeführt werden.

Insbesondere für Brennelemente von Leichtwasser-Kernreaktoren werden häufig hochdichte oxidische Kernbrennstoffkörper aus $UO_2$ benötigt, die Selten-Erdoxide wie z. B. Gadoliniumoxid enthalten, welche die Rolle eines abbrennbaren Neutronengiftes spielen.

Beim Sintern von direkt gemischtem und ohne Zusätze gepreßtem Uran-Gadoliniumoxid-Mischpulver hat sich gezeigt, daß der Sinterprozeß von dem bei reinem $UO_2$ in gravierender Weise abweicht. Insbesondere können im Bereich um 6 Gew.-% $Gd_2O_3$ die benötigten Dichten trotz sehr langer Sinterdauer kaum erreicht und eingehalten werden. Eingehende Untersuchungen haben ergeben, daß sich im Verlauf des Sinterns diffusionsstabile und somit sinterhemmende Phasen ausbilden können. Dies zeigt sich insbesondere dadurch, daß die Sinterverdichtung im Temperaturbereich oberhalb von 1200° C verzögert abläuft. Dieser Effekt ist besonders bei Gadoliniumgehalten um 6 Gew.-% ausgeprägt, erstreckt sich aber über den ganzen Konzentrationsbereich von etwa 4 bis 8 Gew.-% und mehr.

Bisher kamen überwiegend $Gd_2O_3$-Konzentrationen von 2 bis 4% zum Einsatz in Leichtwasserreaktoren. Da aber eine Erhöhung der Konzentration, insbesondere im Hinblick auf den Einsatz in Brennelementen mit hohem Zielabbrand wünschenswert ist, ergab sich die der Erfindung zugrunde liegende Aufgabe, ein Sinterverfahren zu finden, mit dem es möglich ist, auch die höheren Gewichtsanteile von Gadoliniumoxid ohne die erwähnten Schwierigkeiten, insbesondere hinsichtlich der Sinterdichte bei kontrollierter Struktur zu erreichen.

Durch das erfindungsgemäße Sintern in zwei Temperaturstufen wird erreicht, daß die Hauptverdichtungsprozesse unterhalb der Starttemperatur für die Bildung der sinterhemmenden Mischkristallphasen ablaufen können. Die durch eine oxidierende Atmosphäre eingestellte Überstöchiometrie verhindert dabei weitgehend die Bildung der sinterhemmenden Phasen, die sich bei reduzierender Atmosphäre bilden können und bewirkt über die Aktivierung von Transportprozessen bereits bei niedrigen Temperaturen eine starke Verdichtung.

Das Sintern in der zweiten Stufe bei Temperaturen über 1650° C in reduzierender Atmosphäre dient zur Stöchiometrieeinstellung im Brennstoff. Über die Haltezeit bei Temperaturen größer 1650° C läßt sich eine Feineinstellung der Dichte vornehmen.

Zur weiteren Erläuterung seien nun die einzelnen Verfahrensschritte nochmals zusammen mit den dadurch bewirkten Veränderungen im Kernbrennstoff dargestellt:

Zunächst werden die Ausgangspulver aus rieselfähigem $UO_2$, das beispielsweise nach dem AUC-Verfahren hergestellt wurde, und aus Selten-Erdoxiden, speziell Gadoliniumoxid mit Konzentrationen bis 10 Gew.-Prozent direkt gemischt.

Diese Mischung wird anschließend zu Grünlingen verpreßt, und zwar ohne daß Gleitmittel, Bindemittel oder Porenbildner zugesetzt werden müssen. Es ist jedoch möglich, trocken aufgearbeiteten Fertigungsrücklauf, der zu $U_3O_8$ verglüht ist, bis zu 20 Gew.-% direkt zuzumischen. Diese Schrottzuga-

2

**0 026 389**

be wirkt im fertig gesinterten Kernbrennstoff porenbildend und erlaubt dadurch eine gezielte Dichtesteuerung sowie die Einstellung einer geeigneten Poren- und Kornstruktur der Sinterkörper.

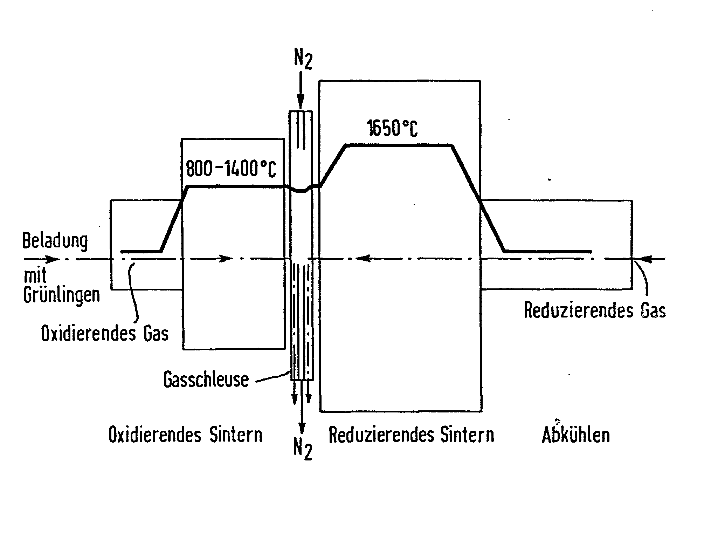

Diese Grünlinge werden dann in einen Zweizonen-Sinterofen eingebracht, wie er in der Figur schematisch einschließlich des benötigten Temperaturprofils dargestellt ist.

Die Beladung des Sinterofens geschieht auf der Niedertemperaturseite, die Temperaturen von 800–1400° C, beispielsweise 1100° C, aufweist. In dieser Zone herrscht eine oxidierende Atmosphäre, z. B. aus $CO_2/CO$-Mischungen oder auch $CO_2$ technischer Reinheit (ohne Nachreinigung), die beispielsweise in Bewegungsrichtung der Grünlinge in den Ofenraum eingeleitet wird. Eine Mischkristallbildung, die sinterhemmend wirken würde, findet in diesem Temperaturbereich noch nicht statt. Dies bedeutet, daß die durch die Sinterbedingungen eingestellte Überstöchiometrie hauptsächlich ein Sintern der $UO_2$-Partikel bewirkt, die zugesetzten Selten-Erdoxide jedoch davon weitgehend unberührt bleiben.

Anschließend wird das Sintergut durch eine mit Stickstoff gespülte Gasschleuse in den zweiten auf über 1700° C aufgeheizten Ofenteil geschoben. Dort herrscht eine reduzierende Atmosphäre, beispielsweise aus Wasserstoff technischer Reinheit oder Mischungen von Wasserstoff mit trockenen oder angefeuchteten neutralen Gasen, beispielsweise 8% $H_2$/92% $N_2$ sowie auch Ammoniak. Diese Gase durchströmen den Hochtemperaturteil, beispielsweise entgegen der Bewegungsrichtung der Sinterkörper. Der Verbleib derselben in der Hochtemperaturzone wird variiert zwischen 30 Minuten und 4 Stunden, wobei bei diesem isothermen Sintern die Mischkristallbildung aus $UO_2$ und Selten-Erdoxiden stattfindet. Über die Sinterzeit kann dabei die Einstellung der Mikrostruktur vorgenommen werden.

Die bereits erwähnte Befeuchtung der reduzierenden Gasatmosphäre ist an sich bekannt und dient zur besseren Fluorabreicherung in den Kernbrennstofftabletten.

Die Tabelle zeigt die mit diesem Verfahren erreichten Sinterergebnisse in Abhängigkeit des Gewichtsanteils von Gadoliniumoxid sowie der Haltezeiten und Temperaturen in den beiden Sinterstufen.

| $UO_2/Gd_2O_3$-Brennstoffkörper mit x Gew.-% $Gd_2O_3$ | Temperatur des oxidierenden Sintern in °C | Haltezeit während des oxidierenden Sintern in min | Temperatur der Zone des reduzierenden Sinterns in °C | Haltezeit während des reduzierenden Sinterns in min | Sinterdichte in g/cm³ | Sinterdichte in % der theoretischen Dichte |
|---|---|---|---|---|---|---|
| x = 4 | 1100 | 30 | 1750 | 120 | 10,52 | 97,4 |
| 5 | 1000 | 30 | 1750 | 240 | 10,24 | 95,2 |
| 6 | 950 | 60 | 1750 | 180 | 10,35 | 96,5 |
| 6,5 | 900 | 60 | 1750 | 240 | 10,33 | 96,5 |
| 6,5 | 1000 | 45 | 1750 | 180 | 10,33 | 96,5 |
| 6,5 | 1100 | 60 | 1750 | 240 | 10,36 | 96,8 |
| 7 | 920 | 60 | 1750 | 180 | 10,07 | 94,3 |
| 7 | 970 | 60 | 1750 | 180 | 10,12 | 94,7 |

Die nach diesem Verfahren hergestellten Brennstoffkörper erreichen demnach hohe Dichten, insbesondere größer oder gleich 94% der theoretischen Dichte.

Die erreichten Dichten sind im Konzentrationsbereich 0–10 Gew.-% von der Konzentration des Selten-Erdoxides, insbesondere des Gadoliniumoxids, weitgehend unabhängig.

Die hohen Sinterdichten erlauben eine Zugabe bis 20% $U_3O_8$ als Porenbildner und zur Dichtesteuerung für ein stabiles Verhalten während des Abbrandes im Kernreaktor.

Die eingangs erwähnten bisherigen Schwierigkeiten konnten somit durch dieses relativ einfache Verfahren praktisch vollkommen behoben werden.

3

**Patentansprüche**

1. Verfahren zur Herstellung von hochdichten oxidischen Kernbrennstoffkörpern aus $UO_2$ mit folgenden Schritten:

a) Mischen des Kernbrennstoffpulvers mit bis zu 10 Gew.-% Pulver aus Selten-Erdoxid, wie z. B. Gadoliniumoxid,
b) Pressen zu Grünlingen,
c) Sintern in oxidierender Atmosphäre bei 800—1400° C für eine Zeit von 15 Minuten bis 2 Stunden,
d) Sintern in reduzierender Atmosphäre bei Temperaturen über 1650° C für eine Zeit von 30 Minuten bis 4 Stunden.

2. Verfahren nach Anspruch 1, dadurch gekennzeichnet, daß als oxidierende Atmosphäre technisch reines Kohlendioxidgas verwendet wird.

3. Verfahren nach Anspruch 1, dadurch gekennzeichnet, daß als reduzierendes Gas Wasserstoff technischer Reinheit und Mischungen von Wasserstoff mit trockenen oder angefeuchteten neutralen Gasen, beispielsweise 8% $H_2$/92% $N_2$ oder auch $NH_3$ verwendet werden.

4. Verfahren nach den Ansprüchen 1 bis 3, dadurch gekennzeichnet, daß zur Dichtesteuerung bis zu 20 Gew.-% $U_3O_8$ z. B. aus Sinterschrott dem Ausgangspulver zugegeben werden.

5. Verfahren nach den Ansprüchen 1 bis 4, dadurch gekennzeichnet, daß zur Einstellung der Tablettenstruktur eine entsprechende Menge Sinterrücklauf aus $(U,Gd)_3O_8$ zugefügt wird.

6. Verfahren nach einem der Ansprüche 1 bis 5, dadurch gekennzeichnet, daß daß zwei separate Sinteröfen für oxidatives und reduzierendes Sintern verwendet werden, die räumlich zur Abkühlung des Sintergutes getrennt sein können.

7. Verfahren nach den Ansprüchen 1 bis 5, dadurch gekennzeichnet, daß sie ein Zweizonen-Sinterofen mit zwischengeschalteter, Inertgas gespülter Gasschleuse verwendet wird.

8. Verfahren nach Anspruch 7, dadurch gekennzeichnet, daß als Gasschleusen-Inertgas Stickstoff verwendet wird.

9. Verfahren nach Anspruch 1, dadurch gekennzeichnet, daß das oxidierende Gas in der Niedrigtemperatursinterzone in Richtung des Sintergutes, das reduzierende Gas in der Hochtemperatursinterzone dagegen gegen die Bewegung des Sintergutes strömt.

**Claims**

1. Process for preparing high-density oxidic nuclear fuel bodies from $UO_2$ by means of the following steps:

a) Mixing the nuclear fuel powder with up to 10% by weight of powder comprising rare earth oxides, for example Gadolinium oxide,
b) press-forming into raw blanks,
c) sintering in an oxidising atmosphere at 800—1400° C for a period of between 15 minutes to 2 hours,
d) sintering in a reducing atmosphere at temperatures above 1650° C for a period of 30 minutes to 4 hours.

2. Process according to claim 1, characterised in that commercially pure carbon dioxide gas is used as oxidising atmosphere.

3. Process according to claim 1, characterised in that hydrogen of commercial purity and mixtures of hydrogen with dry or moist neutral gas, for example 8% $H_2$/92% $N_2$ or even $NH_3$ is used as reducing gas.

4. Process according to claims 1 to 3, characterised in that up to 20% by weight of $U_3O_8$, for example comprising sintering scrap, is added to the initial powder.

5. Process according to claims 1 to 4, characterised in that a corresponding quantity of sintering returns comprising $(U,Gd)_3O_8$ is added to adjust the pellet structure.

6. Process according to any of the claims 1 to 5, characterised in that two separate sintering furnaces are used for oxidising and reducing sintering, which said furnaces may be spatially separated for cooling the sintered material.

7. Process according to claims 1 to 5, characterised in that a two-zone sintering furnace with an interposed gas lock, flushed with inert gas, is used.

8. Process according to claim 7, characterised in that nitrogen is used as inert gas for the gas lock.

9. Process according to claim 1, characterised in that the oxidising gas in the low temperature sintering zone flows in the direction of the sintering material and the reducing gas in the high temperature sintering zone flows opposite to the motion of the sintering material.

# 0 026 389

## Revendications

1. Procédé de fabrication de corps en combustible nucléaire oxydé de haute densité, en $UO_2$ par les stades suivants:

a) mélange de la poudre de combustible nucléaire à jusqu'à 10% en poids de poudre d'oxyde de terres rares, comme d'oxyde de gadolinium,

b) compression en barreaux de combustible sans action thermique,

c) frittage en atmosphère oxydante, entre 800 et 1400°C pendant une durée de 15 minutes à 2 heures,

d) frittage en atmosphère réductrice, à des températures supérieures à 1650°C pendant une durée de 30 minutes à 4 heures.

2. Procédé suivant la revendication 1, caractérisé en ce qu'il consiste à utiliser, comme atmosphère oxydante, du dioxyde de carbone gazeux techniquement pur.

3. Procédé suivant la revendication 1, caractérisé en ce qu'il consiste à utiliser, comme gaz réducteur, de l'hydrogène de pureté technique, et des mélanges d'hydrogène et de gaz secs ou humides, par exemple un mélange de 8% d'$H_2$ et de 92% de $N_2$ ou également du $NH_3$.

4. Procédé suivant les revendications 1 à 3, caractérisé en ce qu'il consiste, pour se rendre maître de la densité, à ajouter à la poudre de départ jusqu'à 20% en poids de $U_3O_8$, provenant par exemple du rebut de frittage.

5. Procédé suivant les revendications 1 à 4, caractérisé en ce qu'il consiste, pour régler la structure des comprimés, à ajouter une quantité adéquate de produits recyclés de frittage en $(U,Gd)_3O_8$.

6. Procédé suivant l'une des revendications 1 à 5, caractérisé en ce qu'il consiste à utiliser, pour le frittage oxydant et pour le frittage réducteur, deux fours de frittage distincts qui peuvent être séparés dans l'espace, en vue du refroidissement du produit fritté.

7. Procédé suivant les revendications 1 à 5, caractérisé en ce qu'il consiste à utiliser un four de frittage à deux zones, avec und sas à gaz intermédiaire lavé par du gaz inerte.

8. Procédé suivant la revendication 7, caractérisé en ce qu'il consiste à utiliser de l'azote comme gaz inerte pour le sas à gaz.

9. Procédé suivant la revendication 1, caractérisé en ce que le gaz oxydant s'écoule dans le sens du produit à fritter dans la zone de frittage à basse température, et le gaz réducteur s'écoule dans le sens opposé à celui du produit fritté dans la zone de frittage à température élevée.

5

N<sub>2</sub>

Beladung
mit
Grünlingen

Oxidierendes Gas

Gasschleuse

Oxidierendes Sintern

800 - 1400°C

1650°C

Reduzierendes Gas

Reduzierendes Sintern

Abkühlen

N<sub>2</sub>